# EUROPEAN PATENT APPLICATION

(11) **EP 4 707 588 A1**
(43) Date of publication of application: **11.03.2026**
(21) Application number: 24382961.1
(22) Date of filing: 09.09.2024
(51) Int. Cl.: F03D 80/50, F03D 1/06

(54) **METHOD FOR REPAIRING THE ROOT OF A BLADE**

(71) Applicant: Nabrawind Technologies, S.L., 31002 Pamplona (ES)
(72) Inventor: MONREAL LESMES, Javier, Zizur Mayor (ES); SANZ PASCUAL, Eneko, Pamplona (ES); AROCENA DE LA RÚA, Ion, Pamplona (ES); IRIARTE ELETA, Javier, Zizur Mayor (ES); MAYOR MORENO, Luis Alberto, Madrid (ES); RODRÍGUEZ SAIZ, Emilio, Sopelana (ES); RODRÍGUEZ VEGA, Victor, Madrid (ES)

(57) **Abstract**

Method for repairing a root of a blade having the following sequence: loosening the bolts (6) of the root of the blade (5) by removing the nuts (20) in the bearing (7) of the bushing (3). Lowering the blade to the ground using the Bladerunner^{®}. Cutting a diametral ring of the blade that includes the surface (10) where the threaded cup (9) housing the nut (6) is included. Cleaning up and laminating the bevelled area (11). Machining a long bore passing through the bevelled area (13) and a short and through bore (14) in the thickness direction. Adding and adapter (15) that combines both technologies (one per each end) and allows the length of the blade (4) to be increased and consequently its AEP (Annual Energy Production) is increased. Said adapter (15) is a ring with through holes (17 and 22) over its entire surface, which is attached on the portion of the root of the blade (5) with T-bols and on the portion of the bushing (3) with the bolts (6) that have been previously removed, housed in the inserts (9).

## Description

### Field of invention

The present invention falls within the blades that are attached to the rotor of a wind turbine. The root of the blade is attached to the bushing by means of bolts. These bolts are screwed into metal cups that are inserted into holes drilled in the front surface of the root. When these metal cups or their joints fail to perform, they must be repaired. The present invention describes the repair method.

### Background

The bolts and inserts connecting the root of the blade to the bushing are subjected to great stress. If the bushing that houses the bolt or its connection to the root of the blade fails to perform, a delamination of the composite material occurs, causing a crack to appear in the blade and its subsequent propagation. If the bushing comes loose, it can also cause failure in the composite material and the connecting bolts. These failures, when they propagate, have the characteristic of being able to become catastrophic and cause the blade to detach from the bushing.

There are different methods to solve existing failures in the connection of root of the blade with the bushing. US patent 10815974B2 shows a repair with reinforcing fiber, calculating the number of layers and the direction of the fiber. Resin is added that is cured with ultraviolet rays. The necessary adhesion force is taken into account depending on the sector of the root to be repaired. Patent WO2019110068 presents a repair method that has the following steps: Extracting the bushing, reconditioning of the gap and inserting a new bushing that has a special cover on its internal side to facilitate the insertion of the bolt. Patent US201015866 presents another method: preparing the surface, removing the cups and replacing them with new ones. The cups may be bonded. The repair can be done in modular sections, with pre-molded parts, and the repair can be done with the blade attached to the bushing. Patent EP3508718 describes a repair method where: The root of the blade is drilled radially coinciding with the blind axial holes. A threaded pin, or one that can be threaded later, is inserted and glued. Finally, threaded bolts longer than the original ones are inserted.

From the solutions described, it is concluded that there is no method that alternates the technology of glued inserts with the T-bolt technology, following the steps of: cutting a ring from the root of the blade, reinforcing the non-damaged area by the delamination to carry out subsequent drilling/moun-facing and concluding the repair by adding an adapter with its corresponding joining elements to be fixed with the bushing.

### Description

The root of the blade is a cylindrical surface with a series of blind axial holes where threaded cups are housed that receive the bolts connecting the bearing of the bushing, thus achieving the interface between the blade and the wind turbine bushing.

Due to the stresses to which the connecting bolts are subjected, cracks arise at the root of the blade, which propagate over time due to the induced stresses and fatigue due to the rotor loads.

This repair method is applicable to composite material blades: fiberglass and/or carbon fiber with epoxy and/or polyester resins.

It is an object of the invention that the repair method is carried out in the non-aerodynamic area of the blade: The area between the bushing and the transition area where the airfoil begins (known as the root of the blade). The repair in this area alternates glued insert technology with T-bolt technology.

It is another object of the invention that the steps taken during the repair method are: cutting, cleaning up, laminating, machining and installing the adapter and that all of them are carried out *in situ* and in a simple manner. With the cutting step, a complete diametral cut is made within the non-aerodynamic area. With the cleaning up step, the surface is prepared based on the damage suffered in each case. The laminating step proceeds in two ways: a) compose the necessary laminate with prefabricated sectors and through an infusion process with tools that allow its positioning to obtain the desired ring, b) add composite material achieving sufficient volume for subsequent machining. and placement of the fixing elements towards the side of the bushing and their smooth transition towards the side of the aerodynamic zone of the blade. The last step is to add the adapter that replaces the cut area and allows the interface between the repaired area of the blade and the bushing.

From all the above described, the following advantages are reclaimed: both damaged areas and those close to the damage initiation phase are replaced, extending the life of the blade and being able to increase the resistance of the root above the initial design resistance. It also allows to repair blades damaged due to excess load and initial design failure. And finally, by adding the adapter you can increase the length of the blade, increasing the diameter of the rotor and the AEP (Annual Energy Production).

### Brief description of the drawings

A brief description will be given below for a series of drawings useful for better understanding the invention and that expressly relate to an embodiment of said invention that is presented as a non-limiting example thereof.
Figure 1 represents a wind turbine and the union of one of its blades.
Figure 2 represents a detail of the connecting bolts and cups of the blade with the rotor hub.
Figure 3 shows the blade differentiating the root from the rest of the blade.
Figures 4a and 4b show the steps followed to carry out the repair according to two cut points. Figure 4c is the ring infusion process with prefabricated sectors.
Figures 5a, 5b and 5c are perspective views of the non-aerodynamic area where the repair takes place. Blade area, adding the adapter and adding the bearing that is fixed to the bushing.
Figure 6 is section AA of figure 5c showing the different parts that make up the non-aerodynamic area, once the repair is completed.
Figure 7 shows a second embodiment of another type of adapter used in the repair.

### Detailed description

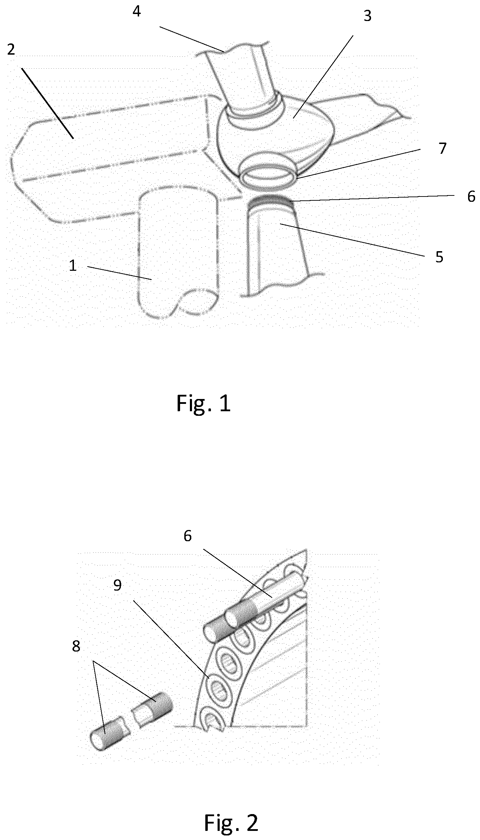

As shown in Figure 1, a wind turbine basically consists of a tower (1) that supports the nacelle (2). In the front part of the nacelle (2) there is the rotor hub (3) that houses the blades (4). The connection between the blade (4) and the rotor hub (3) is made through the root of the blade (5). The root of the blade (5) is a cylindrical surface with a series of blind axial holes where threaded cups are housed that receive the bolts (6) connecting to the bearing (7) of the rotor hub (3), thus achieving the interface between the blade (4) and the rotor hub (3) of the wind turbine.

Due to the stresses to which the connecting bolts (6) are subjected, cracks arise at the root of the blade (5) which propagate over time due to the induced stresses by the rotor loads.

Figure 2 shows the bolts (6) with the double thread (8) that joins them to the threaded bushing (9) and the bearing of the bushing (not shown in the figure). The attachment to the bearing of the bushing is normally through its corresponding nut.

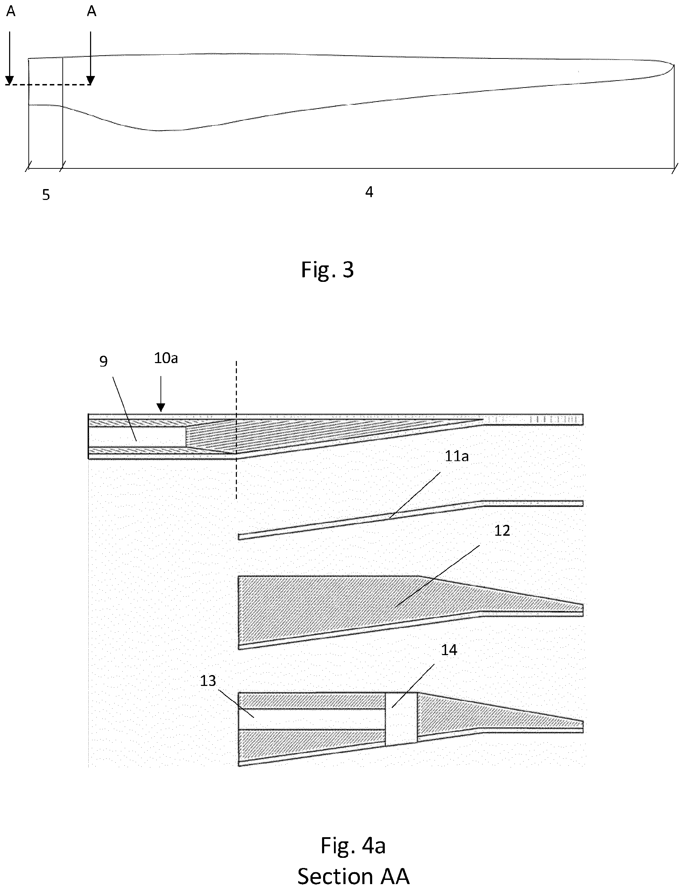

Figure 3 shows the part corresponding to the root of the blade (5) and the rest of the blade (4). The repair object of the invention is carried out in the non-aerodynamic area corresponding to the root of the blade (5).

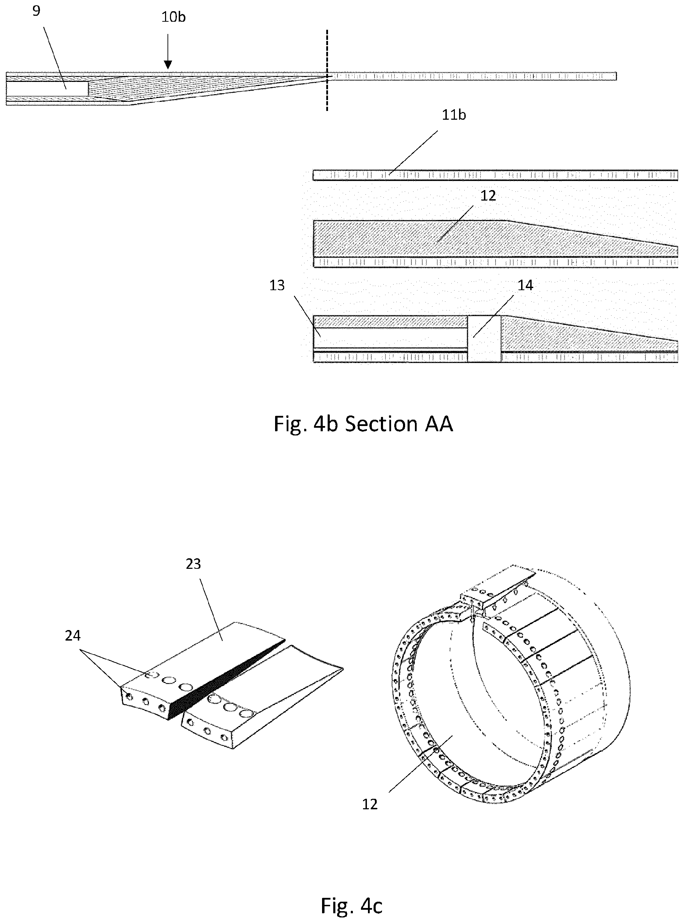

As shown in Figures 4a and 4b, performing a section AA on the root area of the blade (5) represents the sectioned surface.

Once the blade (4) has been separated from the rotor hub (3) and has been placed on the ground using the Bladerunner ^{®}, crane-free lowering system, proceed with the repair method following the following steps:

### Step 1: Cutting.

Once all the bolts (6) have been removed, the cutting proceeds, shown with a dashed line. In Figure 4a, the cut made is diametrical and covers the entire cylindrical surface (10) where the blind axial holes that house the threaded cups (9) are arranged. In Figure 4b, the cut covers the surface (10b) corresponding to the root of the blade (5). The length of material cut depends on the type of blade and the damage incurred. An approximate distance would be half a meter.

### Step 2: Cleaning up.

A visual inspection of the area adjacent to the cut cylindrical surface (10a) is carried out. If there is foam, all imperfections are removed and cleaned. After cleaning the surface, it acquires a bevelled shape (11a) for the first of the embodiments. In the second embodiment, after the cut area (10b), it must be cleaned up by removing the paint and sanding the straight surface (11b).

### Step 3: Laminating.

It is laminated in a manual or automatic process with a taping machine of the type that has a belt that continually comes and goes, depositing composite material. The laminate is carried out on the outer surface (11a and 11b). Once laminated, the curing proceeds, leaving a section (12) wide enough to proceed to the next step.

According to Figure 4c, the laminate is carried out with prefabricated sectors (23) that have been previously manufactured in the factory and have been provided with the corresponding front and surface holes (24). The sectors (23) can be prefabricated with the bevelled shapes explained in Figures 4a and 4b. With the prefabricated sectors, the ring is composed with an infusion process and tools that allow its positioning.

### Step 4: Machining.

The machining is carried out in a manual process with the help of a template or in an automatic process with a drill that is fixed to the external surface of the blade root (5). In the longitudinal axis, a long bore is drilled through the entire bevelled area (13) of approximately 300mm and in the radial axis a short and through bore (14) is drilled in the thickness direction.

If the laminate is composed according to Figure 4c, the machining process will be simpler because the prefabricated sectors (23) have their corresponding holes (24) and only the fabrics used for fixing the sectors (23) will have to be passed through. A final mount-facing will leave the laminate ready to receive the adapter (15).

### Step 5: Adapter.

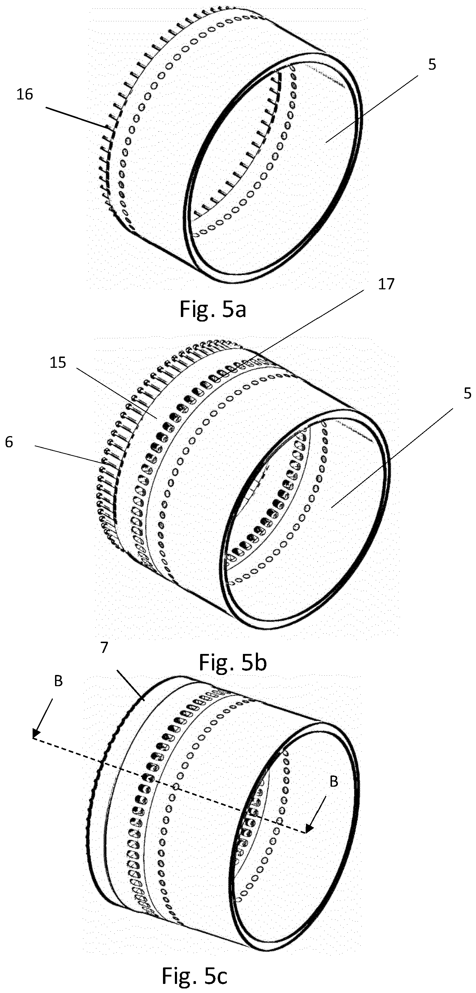

The adapter (15) is a ring that has a length similar to the cut one (approximately half a meter) and adapts the root of the blade (5) to the rotor hub (3) combining threaded hole technology with T-bolt technology. The adapter (15) is produced separately and brought to the repair site. On the blade part (5) it has housings for T-bolts (16) and on the rotor hub (3) part it has housings for threaded bolts (6). The number of T-bolts is less than that of threaded bushings since, although T-bolts have greater resistance, they require a greater lateral distance between them. Because the number of joining elements does not match, an adapter is used that also allows changing the total length of the blade (4). The adapter is metallic for lengths up to 1m, having to be made of composite material if the length needs to be increased, for reasons of weight and cost. It has through holes (17) on its entire external surface to accommodate the connection with bladed T-bolts, as shown in figures 5a, 5b and 5c.

### Step 6: Installing the adapter.

As shown in the perspective view of the repaired area in Figure 5, the adapter (15) is added to the blade (5). First, the bolts (16) are mounted on the blade root (5) by threading them into their corresponding barrels (18) and then assembled with the adapter (15) through washers and nuts (19), forming the T-bolt joint. The bolts (6) at the opposite end are the same as the original bolts since they must be the same number of bolts and with the same thread size, although they may be of different lengths. Said bolts (6) pass through the bearing (7) of the rotor hub (3) and are threaded with their corresponding nuts (20). On the other hand, the geometry of the cavity should not have sharp edges, which induce stress concentrators, so in most designs they will have torn cylindrical geometry. To adapt the nuts (19) it is necessary to have a flat surface, so in this case, a cylindrical washer (21) is added that goes from a curved surface to a flat one.

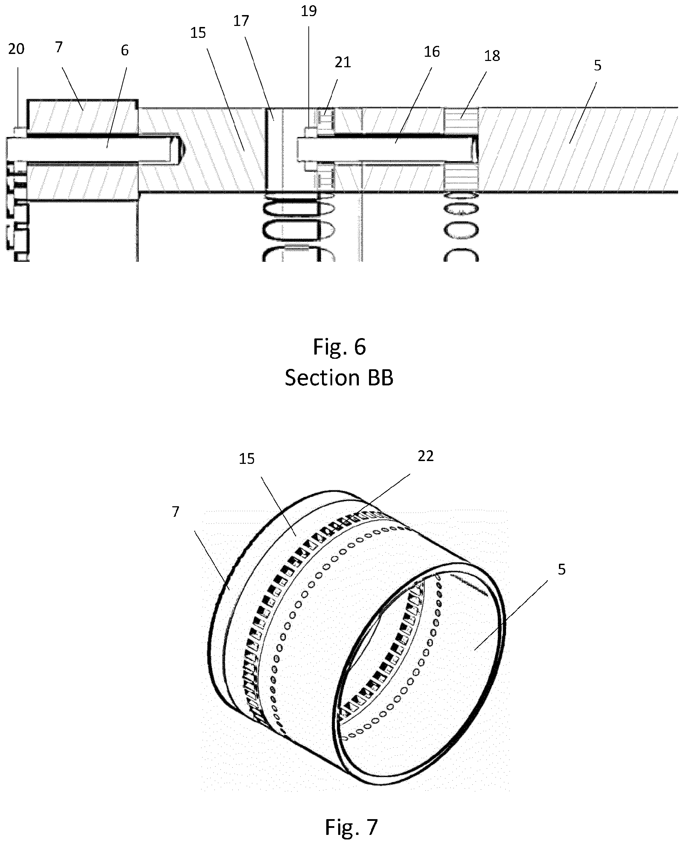

In a second practical embodiment shown in Figure 7, the adapter (15) has rectangular holes (22) with radii matching the edges, but which allow the union nut (19) to be housed to the bolt (16) through use of conventional flat washers.

## Claims

1. Method of repairing the root of a blade, which is attached to the rotor hub (3) of a wind turbine by means of bolts (6) inserted in threaded cups (9) integrated into the root (5), **characterized in that** once the blade (4) has been separated from the rotor hub (3) and descended to the ground, following these steps:
- Removing all the bolts (6),
- cutting transversely a section (10a and 10b) of the blade that includes the threaded cups (9),
- cleaning up the area adjacent to the cut,
- laminating the cleaned area by joining prefabricated sectors (23) with their corresponding holes (24) and infusing the laminate (12),
- machining the laminate (12) with a long bore (13) in the longitudinal axis and a short and through bore (14) in the radial axis,
- adding an adapter (15) formed by a ring with through holes (17 and 22) on its entire surface, which has connection points at its ends, one at the root of the blade (5) with T-bolts and another for the bushing (3) part with the bolts (6) in the threaded cups (9),
- installing the adapter (15), first adding the bolts (16) at the end of the root of the blade (5), threading the barrel (18) and then the nut (19) with its corresponding washer (21), then the bolts (6) are threaded and assembled to the bushing (3) with their corresponding nuts.

2. Method of repairing the root of a blade according to claim 1, **characterized in that** when transversely cutting a section (10a) of the blade, a bevelled area (11a) turns up to be cleaned and laminated with fabrics that increase in thickness and that subsequently are cured.

3. Method of repairing the root of a blade according to claim 1, **characterized in that** when transversely cutting a section (10b) of the blade, a smooth surface (11b) turns up to be cleaned and laminated with fabrics that increase in thickness and that subsequently are cured.

4. Method of repairing the root of a blade according to claim 1, **characterized in that** it is laminated in an automatic process with a taping machine.

5. Method of repairing the root of a blade according to claim 1, **characterized in that** it is laminated in a manual process.

6. Method of repairing the root of a blade according to claim 4, **characterized in that** the machining is carried out in an automatic process with a circular drilling machine.

7. Method of repairing the root of a blade according to claim 1, **characterized in that** the machining is carried out in a manual process with the help of a circular template that is fixed to the external surface of the root of the blade.

8. Method of repairing the root of a blade according to claim 1, **characterized in that** in the machining of the long bore (13) is approximately 300mm

9. Method of repairing the root of a blade according to claim 1, **characterized in that** the adapter (15) is metallic with an approximate length of 0.5m, for longer lengths it is made of composite material.

10. Method of repairing the root of a blade according to claim 1, **characterized in that** the through holes (17) of the adapter are oval and combine a cylindrical washer (21) that goes from a curved surface to a flat one.

11. Method of repairing the root of a blade according to claim 1, **characterized in that** the through holes of the adapter (15) are rectangular holes (22) and are combined with a conventional flat washer.

12. Method of repairing the root of a blade according to claim 1, **characterized in that** the adapter (15) is longer than the cut area (10), increasing the diameter of the turbine rotor and the AEP.

13. Method of repairing the root of a blade according to claim 1, **characterized in that** once the blade (4) has been separated from the bushing (3) and is deposited on the ground using the Bladerunner^{®} crane-free lowering system.
